# EUROPEAN PATENT APPLICATION

(11) **EP 2 508 344 A1**
(43) Date of publication of application: **10.10.2012**
(21) Application number: 10832949.1
(22) Date of filing: 16.09.2010
(51) Int. Cl.: B32B 27/36, B32B 27/00, B32B 27/30

(54) **RELEASE FILM**

(30) Priority: 30.11.2009 JP 2009271180
(71) Applicant: Mitsubishi Plastics, Inc., Tokyo 103-0021 (JP)
(72) Inventor: ISAKI, Kimihiro, Maibara-shi Shiga 521-0234 (JP); YOSHIHARA, Kenji, Maibara-shi Shiga 521-0234 (JP); FUJITA, Masato, Maibara-shi Shiga 521-0234 (JP)
(74) Representative: TER MEER - STEINMEISTER & PARTNER GbR
(86) International application number: PCT/JP2010/066094
(87) International publication number: WO 2011/065102

(57) **Abstract**

The object of the present invention is to provide a release film in which the oligomer precipitation from the film surfaces constituting the release film in the respective film processing steps such as an adhesive-applying step of, drying step and sticking step is reduced as possible and it can be attained to improve the continuous production of film.

The above object is attained by a release film comprising:
a polyester film,
coating layers which is formed on both surfaces of said polyester film and comprises a polymer containing ammonium base, a polymer containing polyethylene glycol and a crosslinking agent, and
at least one release layer formed on at least one surface of said coating layers.

## Description

### TECHNICAL FIELD

The present invention relates to a release film, and more particularly, to a release film which can be suitably used in optical applications requiring higher transparency such as productions of touch panels and liquid crystal polarizing plates.

### BACKGROUND ART

Release films using a polyester film as a base material have been used in extensive applications. For example, in the production process of touch panels, there are exemplified structures of (A) hard coat layer/polyester film/adhesive layer/release layer/polyester film (B), or the like (refer to Patent Documents 1 and 2).

Upon the heat-treating release film, oligomers (especially, a cyclic trimer) are precipitated/crystallized contained in the polyester film so that it is difficult to obtain a high accuracy transparent conductive thin film by generation of coating defects

In case of using a release film in the processing step, by contacting and rubbing especially a conveying guide roll with the film surface providing no release layer (for example, the above polyester film (B) surface), there is a possibility of attaching and depositing of oligomer derived from the polyester film on the conveying roll in the processing. Therefore, it is required to stop the production line temporarily and clean up the oligomer so that it is difficult to ensure a continuous production.

As a method for preventing the above oligomer precipitation, there is proposed a method in which a curable resin layer comprising a silicone resin and an isocyanate-based croslinking agent is formed on a polyester film (refer to Patent Document 3). However, since the curable resin layer is formed by heat curing, high temperature heat treatment is required for the disassociation of blocks forming agent of isocyanate-based resin so that a lot of attention is required in handling the film because curls and slacks are likely to generate in the processing.

Further, as the other method for preventing the above oligomer precipitation, there is proposed a method in which oligomers are removed previously from the polyester material constituting the polyester film by use of solid phase polymerization and a film is produced by use of such polyester material whose oligomer content is previously reduced. However, in this method, the effect of preventing oligomer precipitation is not attained to the required level and is insufficient because heat deterioration generates in the melting step of polyester material.

On the other hand, in case of preventing the oligomer precipitation by using the coating layer, it is required that the coating layer has more excellent heat resistance than that of conventional coating layer in view of applications, and has good transparency of coating layer itself and good preventing effect of oligomer precipitation.

Especially, in touch panel application, recently, mounting release film to communication information equipments such as mobile phone and PDA (Personal Digital Assistance) and to game machines grows in frequency. Therefore, with the growth of these application fields, the request to the release film tends to prefer the higher visibility.

Accordingly, in the release film used in these application fields, one of factors to reduce the productivity is a contamination problem in the production process caused by precipitated oligomers derived from the polyester constituting the release film in a series of processing steps including an adhesive-applying step of, drying step and sticking step, and this problem is increasingly serious.

As a countermeasure against the above problem, there is proposed for example, a way in which a coating layer such as a hard coat layer is provided on the surface constituting the release film, on which no release layer is provided in order to prevent the precipitation of oligomer. In this way, although a good effect for preventing the precipitation of oligomer can be attained, there may be a problem that the slipping property of film surface is deteriorated when winding the film to form a roll product. Further, there is a tendency of reducing the productivity because it is required to form the hard coat layer by an off line process so that one production step is necessarily added.

Further, when conducting a processing step under a high temperature for a long time such as annealing treatment step, in case where the heat resistance of coating layer it self is in sufficient, the effect for preventing the precipitation of oligomer may not be attained to the desired level. Therefore, along with a continuous production thereof, there may be a problem that with time, oligomers are precipitated and deposited on the surface of conveying rolls from the film surface having no release layer or surface having the release layer.

Therefore, there is a demand of providing a release film used for producing touch panels having such properties that the oligomer precipitation from the respective film surfaces constituting the release film in the film processing steps is reduced as possible, the contamination in the production steps is reduced as possible and it can be attained to improve the continuous production of film.

### PRIOR ARTS

### Patent Documents

Patent Document 1: Japanese Patent Application Laid-Open (KOKAI) No. 2005-144858
Patent Document 2: Japanese Patent Application Laid-Open (KOKAI) No. 2007-200823
Patent Document 3: Japanese Patent Application Laid-Open (KOKAI) No. 2007-320144

### SUMMARY OF THE INVENTION

### Problems to be Solved by the Invention

The present invention has been accomplished to solve the above problems. An object of the present invention is to provide a release film in which the oligomer precipitation from the film surfaces constituting the release film in the respective film processing steps such as an adhesive-applying step of, drying step and sticking step is reduced as possible wherein in the present invention, the "film surfaces" are mainly referred to the surface having no release layer but the surface having the release layer is also included, and it can be attained to improve the continuous production of film.

### Means for Solving Problems

As a result of the present inventors' earnest study, it has been found that the above problems can be readily solved by using a release film comprising a polyester film as a base material having a specific coating layer. The present invention has been attained on the basis of this finding.

That is, in an aspect of the present invention, there is provided a release film comprising:
a polyester film,
coating layers which is formed on both surfaces of said polyester film and comprises a polymer containing ammonium base, a polymer containing polyethylene glycol and a crosslinking agent, and
at least one release layer formed on at least one surface of said coating layers.

### EFFECT OF THE INVENTION

The present invention provides a release film having such properties that in the continuous production of film under for example the heat treatment at 150°C or 180°C, the amount of oligomer precipitation from the respective surfaces of release film is remarkably reduced, the oligomer precipitation and deposit onto the conveying rolls and contamination of product by foreign matters derived from the oligomer can be prevented as possible and it can be attained to improve the continuous production of film. Especially, the release film according to the present invention is quite suitable for optical applications requiring that the contamination by foreign matters is strictly prevented and the higher visibility is required, productions of touch panels and liquid crystal polarizing plates. Thus, the present invention has an extremely high industrial value.

### PREFERRED EMBODIMENTS FOR CARRYING OUT THE INVENTION

The present invention is described in detail below.
In the present invention, the polyester film constituting the release film may have single layer structure as well as multi-layer structure. Not only two or three layers structure but also four or more layers structure may be used unless out of scope of the invention.

The polyester used in the present invention is preferably one obtained by polycondensing an aromatic dicarboxylic acid with an aliphatic glycol, may be a polyester obtained from one aromatic dicarboxylic acid and one aliphatic glycol, and may be a copolyester copolymerizing one or more monomer component. Examples of the aromatic dicarboxylic acid include terephthalic acid and 2,6-naphthalenedicarboxylic acid. Examples of the aliphatic glycol include ethylene glycol, diethylene glycol and 1,4-cyclohexane dimethanol. Typical examples of the polyester include polyethylene terephthalate or the like. On the other hand, as the dicarboxylic acid used for copolyester monomer component, there are exemplified isophthalic acid, phthalic acid, terephthalic acid and 2,6-naphthalenedicarboxylic acid, adipic acid and sebacic acid, and as the glycol component used therefor, there are exemplified ethylene glycol, diethylene glycol, propylene glycol, butanediol, 1,4-cyclohexane dimethanol and neopentyl glycol. Further, oxycarboxylic acid such as p-oxybenzoic acid may be used.

In the polyester film constituting the release film according to the present invention, a polyester whose oligomer content has been reduced may be used for the outermost layer of multi-layer structure film in order to reduce the amount of oligomer which is precipitated/crystallized on the surface of film from the film containing thereof by the heat history during the film processing. As the method for reducing the oligomer amount in the polyester, there may be used a method of solid phase polymerization

In the polyester film constituting the release film according to the present invention, it is required to blend particles therein for the mainly purpose of imparting an easy-slip property thereto and preventing generation of scratch in each production step. The kinds of particles to be blended are not particularly limited as long as they are capable of imparting the easy-slip property to the polyester film. Specific examples of the particles include particles of silica, calcium carbonate, magnesium carbonate, barium carbonate, calcium sulfate, calcium phosphate, magnesium phosphate, kaolin, aluminum oxide, titanium oxide, etc. In addition, as the particles, there may also be used heat-resistant organic particles as described in Japanese Patent Publication (KOKOKU) No. 59-5216, Japanese Patent Application Laid-Open (KOKAI) No. 59-217755, etc. Examples of the other heat-resistant organic particles usable herein include particles of thermosetting urea resins, thermosetting phenol resins, thermosetting epoxy resins and benzoguanamine resins. As the particles, there may be further used deposited particles obtained by precipitating and finely dispersing a part of metal compounds such as a catalyst during the process for production of the polyester.

On the other hand, the shape of the particles used in the polyester layer is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used in the polyester layer is usually in the range of 0.01 to 3 µm and preferably 0.01 to 2 µm. When the average particle diameter of the particles is less than 0.01 µm, the particles may tend to be aggregated together and therefore exhibit a poor dispersibility. On the other hand, when the average particle diameter of the particles is more than 3 µm, the surface roughness of the obtained film tends to be too coarse, so that there tend to arise various problems when coating and forming various surface functional layers, etc., thereon in the subsequent steps.

The content of the particles in the polyester layer is usually in the range of 0.001 to 5% by weight and preferably 0.005 to 3% by weight. When the content of the particles in the polyester layer is less than 0.001% by weight, the resulting film tends to be insufficient in easy-slipping property. On the other hand, when the content of the particles in the polyester layer is more than 5% by weight, the resulting film tends to be insufficient in transparency.

The method of adding the particles into the polyester layer is not particularly limited, and any conventionally known methods can be suitably used therefor. For example, the particles may be added at any optional stages in the process for production of the polyester constituting the respective layers of the film. The particles are preferably added to the polyester after completion of an esterification reaction or a transesterification reaction thereof.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the polyester film used in the present invention may also comprise, in addition to the above particles, known additives such as an ultraviolet absorber, an antioxidant, an antistatic agent, a thermal stabilizer, a lubricant, a dye, a pigment, etc., if required.

The thickness of the polyester film used in the present invention is not particularly limited as long as it lies within any suitable range capable of forming a film shape, and is usually in the range of 25 to 250 µm, preferably 38 to 188 µm, more preferably 50 to 125 µm.

Next, an example of the process of producing the polyester film used in the present invention is more specifically explained, although not particularly limited thereto. That is, in the production process, there is preferably used such a method in which the above-mentioned raw polyester material is extruded from a die in the form of a molten sheet, and the molten sheet is cooled and solidified on a cooling roll to obtain an unstretched sheet. In this case, in order to enhance a flatness of the sheet, it is preferred to enhance adhesion between the sheet and a rotary cooling drum. For this purpose, an electrostatic adhesion method and/or a liquid coating adhesion method are preferably used. Next, the thus obtained unstretched sheet is biaxially stretched. In such a case, the unstretched sheet is first stretched in one direction thereof using a roll-type or tenter-type stretching machine. The stretching temperature is usually 70 to 120°C and preferably 80 to 110°C, and the stretch ratio is usually 2.5 to 7 times and preferably 3.0 to 6 times. Next, the thus stretched sheet is stretched in the direction perpendicular to the stretching direction of the first stage. In this case, the stretching temperature is usually 70 to 170°C, and the stretch ratio is usually 3.0 to 7 times and preferably 3.5 to 6 times. Successively, the resulting biaxially stretched sheet is heat-treated at a temperature of 180 to 270°C under a tension or relaxation within 30% to obtain a biaxially stretched film. Upon the above stretching steps, there may also be used the method in which the stretching in each direction is carried out in two or more stages. In such a case, the multi-stage stretching is preferably performed such that the stretch ratio in each of the two directions is finally fallen within the above-specified range.

Also, upon producing the polyester film according to the present invention, there may also be used a simultaneous biaxial stretching method. The simultaneous biaxial stretching method is such a method in which the above unstretched sheet is stretched and oriented in both of the machine and width directions at the same time while maintaining the sheet in a suitable temperature-controlled condition at a temperature of usually 70 to 120°C and preferably 80 to 110°C. The stretch ratio used in the simultaneous biaxial stretching method is 4 to 50 times, preferably 7 to 35 times and more preferably 10 to 25 times in terms of an area ratio of the film. Successively, the obtained biaxially stretched sheet is heat-treated at a temperature of 170 to 250°C under a tension or relaxation within 30% to obtain a stretched oriented film. As the apparatus used in the above simultaneous biaxial stretching method, there may be employed those stretching apparatuses of any conventionally known type such as a screw type stretching apparatus, a pantograph type stretching apparatus and a linear drive type stretching apparatus.

Further, so-called a coating-stretching method (in line coating), which is a film treatment during the above stretching step of polyester film can be employed. When the coating layer is formed on the laminated polyester film by the in line coating, a preferred film as the polyester film can be produced because the stretching and coating are simultaneously conducted as well as the thickness of coating layer can be thinned as a function of stretching ratio.

Next, the release layer according to the present invention will be explained.
The release layer constituting the release film according to the present invention refers to a layer having releasability and concretely, it is preferred in the use thereof according to the present invention that the release layer has a peel force (F) to an acrylic adhesive tape of 10 to 300 mN/cm, preferably 10 to 200 mN/cm.

The release layer constituting the release film according to the present invention may be formed by the above method during the film production process such as the coating-stretching method (in line coating) or may be formed by so-called "off line coating" where the coating is conducted to once produced film out of the film production process, and both method may be employed. As the coating-stretching method (in line coating), although limiting the following explanation, for example, the coating treatment is conducted after the first stage stretching before the second stage stretching in case of a sequential stretching process. In case where the release layer is formed on the polyester film by the in line coating, it is possible to produce a suitable film as the polyester film because the coating and stretching can be conducted simultaneously as well as the thickness of release layer can be thinned as a function of stretching ratio.

In order to attain a good releasability, it is preferred to contain a curable silicone resin in the release layer constituting the release film of the present invention. As the curable silicone resin, there may be used materials comprising a curable silicone resin as a main component, or modified silicone-type materials obtained by graft-polymerization with an organic resin such as an urethane resin, an epoxy resin and an alkyd resin.

As the curable silicone resin, there may be used any of curing reaction types such as an addition type, a condensation type, an ultraviolet-curable type, an electron beam-curable type and a solvent-free type. As concrete examples thereof, there are exemplified KS-774, KS-775, KS-778, KS-779H, KS-847H, KS-856, X-62-2422, X-62-2461, X-62-1387, KNS-3051, X-62-1496, KNS320A, KNS316, X-62-1574A/B, X-62-7052, X-62-7028A/B, X-62-7619 and X-62-7213 produced by Shin-Etsu Chemical Co., Ltd.; DKQ3-202, DKQ3-203, DKQ3-204, DKQ3-205 and DKQ3-210 produced by Dow Corning Asia Corporation; YSR-3022, TPR-6700, TPR-6720, TPR-6721, TPR6500, TPR6501, UV9300, UV9425, XS56-A2775, XS56-A2982, UV9430, TPR6600, TPR6604 and TPR6605 produced by GE Toshiba Silicones, Co., Ltd; SRX357, SRX211, SD7220, LTC750A, LTC760A, SP7259, BY24-468C, SP7248S and BY24-452 produced by Dow Corning Toray Co., Ltd. Further, in order to control the releasability of release layer, a release control agent may be used in combination.

In the present invention, as the method of forming the release layer on the polyester film, there may be used conventionally known coating methods such as a reverse gravure coating method, a direct gravure coating method, a roll coating method, a die coating method, a bar coating method and a curtain coating method which are described, for example, in Yuji HARAZAKI, "Coating Methods", Maki-shoten, 1979.

In the present invention, the curing condition for forming the release layer on the polyester film is not particularly limited. When forming the release layer by an off line coating method, the heat treatment is conducted generally under 120 to 200°C for 3 to 40 seconds, preferably 100 to 180°C for 3 to 40 seconds as a rough standard. Further, the heat treatment may be used in combination with irradiation with active energy rays such as ultraviolet rays, if required. The coating amount of release layer in view of the releasability, is usually in the range of 0.005 to 1 g/m², preferably 0.005 to 0.5 g/m² and more preferably 0.005 to 0.1 g/m². When the coating amount is less than 0.005 g/m², it may be difficult to form a uniform coat because of unstable of coatability. On the other hand, when thick coating in the amount of more than 1 g/m², there may be problems such as deteriorating the coating adhesiveness and curability of release layer itself.

The polyester film constituting the release film in the present invention may be previously subjected to surface treatments such as corona treatment and plasma treatment.

Next, the coating layer constituting the release film of the present invention is formed by applying the coating liquid on the film and may be provided by in line coating method which is conducted during the film production step as well as by so-called off line coating which is conducted onto the once produced film outside of film production step.

In the present invention, the coating layer constituting the release film essentially comprises the polymer containing ammonium base so as to reduce the oligomer precipitation amount by heat damage to the coating layer from the outside condition.

The polymer containing ammonium base used in the present invention is one having a constituent containing an ammonium base in the polymer main chain or side chain. As concrete examples thereof, there are exemplified a polymer containing pyrrolidinium ring or quaternized alkylamine, or copolymer thereof with a monomer such as acrylic acid and methacrylic acid, a polymer of quaternized product of N-alkylamino acrylamide, a polymer of vinylbenzyl trimethyl ammonium salt, a polymer of 2-hydroxy-3-methacryloxypropyl trimethyl ammonium salt or the like. Further, these products may be used in combination and may be copolymerized with the other binder polymer. As the counter anion of quaternary ammonium base, there are exemplified an ion of halogen, alkylsulfate, alkylsulfonate, nitric acid or the like. Of these, as the counter anion, an anion other than halogen anions is preferred in view of application of the present invention because of especially good heat resistance.

In the molecular weight of polymer containing ammonium base, when the molecular weight is too low, the polymer containing ammonium base is easily removed from the coating layer so that the ability is deteriorated over time or blocking problem of coating layer may arise. Further, too low molecular weight may cause deteriorating the heat resistance. From this view point, the number average molecular weight of polymer containing ammonium base is usually not less than 1000, preferably not less than 2000, more preferably not less than 5000. On the other hand, when the number average molecular weight is too high, there may be a problem of too high viscosity of coating liquid. From this view point, the upper limit of number average molecular weight of polymer containing ammonium base is preferably about 500000. Further, these compounds may be used singly or used as a combination of two or more.

The blending amount of polymer containing ammonium base in the coating layer is preferably 20 to 70% by weight, more preferably 40 to 70% by weight. When out of the above range, it may be difficult to attain the desired oligomer sealing effect.

In the release film according to the present invention, the first coating layer essentially comprises the polymer containing polyethylene glycol together with the polymer containing ammonium base so as to attain an object that a good followability upon stretching in forming the coating layer is attained by ensuring the more excellent coatability than that of the other films. As the polymer containing polyethylene glycol, there are exemplified polymers of polyethylene glycol monoacrylate, polypropylene glycol monoacrylate, polyethylene glycol diacrylate (the degree of polymerization of polyethylene glycol unit is preferably 4 to 14), polypropylene glycol diacrylate, polytetramethylene glycol diacrylate, poly(ethylene glycol-tetramethylene glycol) diacrylate, poly(propylene glycol-tetramethylene glycol) diacrylate, polyethylene glycol-polypropylene glycol-polyethylene glycol diacrylate, polypropylene glycol-polybutylene glycol monomethacrylate, methoxypolyethylene glycol monomethacrylate, methoxypolyethylene glycol monoacrylate, octoxypolyethylene glycol-polypropylene glycol monomethacrylate, octoxypolyethylene glycol-polypropylene glycol monoacrylate, lauroxypolyethylene glycol monomethacrylate, lauroxypolyethylene glycol monoacrylate, stearoxypolyethylene glycol monomethacrylate, stearoxypolyethylene glycol monoacrylate, allyloxypolyethylene glycol monomethacrylate, allyloxypolyethylene glycol monoacrylate, or the like as the starting material.

The number average molecular weight of polymer containing polyethylene glycol is usually not less than 1000, preferably not less than 2000, more preferably not less than 5000. On the other hand, when the number average molecular weight is too high, there may be a problem of too high viscosity of coating liquid. From this view point, the upper limit of number average molecular weight of polymer containing ammonium base is preferably about 500000. Further, these compounds may be used singly or used as a combination of two or more.

In the coating layer constituting the release film according to the present invention, for the purpose of attaining a good followability upon stretching, it is preferable to use an alkylacrylate polymer containing polyethylene glycol. The alkyl chain length of alkylacrylate polymer containing polyethylene glycol is not specifically limited as long as it is generally within the polymerizable range as a polymer. The content of alkylacrylate polymer containing polyethylene glycol constituting the coating layer according to the present invention is preferably 5 to 40% by weight so as to attain the good followability upon stretching. When out of the above range, there may be a problem that the followability upon stretching in forming the coating layer is insufficient.

In the coating layer of release film according to the present invention, the polymer containing ammonium base and the polymer containing polyethylene glycol may be used as a form of mixture or as a form of product previously copolymerized therewith, and is not specifically limited as long as not affecting the scope of present invention adversely. When copolymerizing, generally known production methods can be used.

In the coating layer constituting the release film according to the present invention, a crosslinking agent is essentially used in combination for the purpose of further improvement of durability of the coating layer, unless the subject matter of the present invention is adversely affected thereby. As a concrete crosslinking agent, there are exemplified methylolated or alkylolated urea, melamine, guanamine, oxazoline, epoxy compounds, acrylamide, polyamide compounds, epoxy compounds, aziridine compounds, isocyanate compounds, titanium coupling agents, zirconium-aluminum coupling agents, polycarbodiimide or the like.

In the above crosslinkig agents, melamine crosslinking agent is preferable in view of excellent coatability to a polyester film and adhesive durability of coating layer itself especially in the use of present invention. As the melamine crosslinking agent, there may be used melamine, methylolated melamine derivative obtained from condensation of melamine with formaldehyde, partial or complete etherified compounds obtained by reacting methylolated melamine with a lower alcohol and mixture thereof. Of these, the methylolated melamine derivative obtained from condensation of melamine with formaldehyde is preferable, and as one example of commercial product thereof, "BECKAMINE MA-S" manufactured by DIC Corporation is exemplified.

Further, the melamine crosslinking agent may be a monomer product or condensed product comprising dimer or more polymerized product, and mixture thereof may be used. As the lower alcohol used for the above etherification, there are preferably used methyl alcohol, ethyl alcohol, isopropyl alcohol, n-butanol, isobutanol or the like. As the functional group, there are exemplified an imino group, methylol group, and a group having alkoxymethyl group such as methoxymethyl group and butoxymethyl group in one molecule, that is, an imino group-type methylated melamine, methylol group-type melamine, methylol group-type methylated melamine, complete alkylated-type methylated melamine or the like. Of these, methylolated melamine is especially preferred. Further, for the purpose of accelerating the thermal curing of melamine crosslinking agent, for example, an acidic catalyst such as p-toluenesulfonic acid may be used in combination.

The oxazoline crosslinking agent in the present invention is a compound having oxazoline rings in the molecule and includes a monomer having an oxazoline ring and a polymer synthesized from an oxazoline compound as one of monomer. Especially, a polymer having oxazoline groups at the side chain is preferred and such polymer can be easily obtained by polymerizing an addition polymerizable monomer having an oxazoline group with the other monomer. As commercial products of oxazoline compound using acrylic-based monomer as the other monomer, there are exemplified "EPOCROS WS-500" and "EPOCROS WS-300" (manufactured by Nippon Shokubai Co., Ltd.) which are polymer type crosslinking agents where oxazoline groups are branched with an acrylic-based resin.

The isocyanate compound in the present invention means a compound having isocyanate groups in the molecule. Concretely, there are exemplified hexamethylene diisocyanate, trimethylhexamethylene diisocyanate, cyclohexylene diisocyanate, xylylene diisocyanate, isophorone diisocyanate, naphthalene diisocyanate, tolylene diisocyanate, polyemers thereof, derivatives thereof or the like.

As the epoxy compound in the present invention, there are exemplified a compound having epoxy groups, a prepolymer thereof and a cured product thereof. A typical example thereof is a condensation product of epichlorohydrin and bisphenol A. Especially, a reaction product of a low molecular weight polyol and epichlorohydrin provides an epoxy resin excellent in water solbility.

These crosslinking agents may be used singly or used in combination of plural types. Further, in view of applying to in line coating method, it is preferred that the crosslinking agent has water solubility and water dispersibility. The blending amount of crosslinking agent into the coating layer is usually 1 to 50% by weight, preferably 5 to 30% by weight. When the blending amount is out of the above range, there may be a possibility of insufficient adhesion durability in each coating layer.

In the coating layer constituting the release film in the present invention, a binder polymer may be used in combination unless the subject matter of the present invention is adversely affected thereby.

The "binder polymer" used in the present invention is defined as a high-molecular compound having a number-average molecular weight (Mn) of not less than 1000 as measured by gel permeation chromatography (GPC) according to a flow scheme for evaluation of safety of high-molecular compounds (Council of Chemical Substances; November, 1985), and exhibiting a good film-forming property.

Specific examples of the binder polymer include polyester resins, acrylic resins, polyvinyl resins (such as polyvinyl alcohol, polyvinyl chloride and vinyl chloride-vinyl acetate copolymers), polyurethane resins, polyalkylene glycols, polyalkylene imines, methyl cellulose, hydroxy cellulose, starches, etc.

Also, in order to improve an anti-blocking property and a slipping property of the coating layer, the coating layer preferably comprises particles. Examples of the particles include silica, alumina, kaolin, calcium carbonate, titanium oxide, barium salts and the like.

The blending amount of particles in the coating layer is usually 0.5 to 10% by weight, preferably 1 to 5% by weight. When the blending amount is less than 0.5% by weight, the anti-blocking property may be insufficient. When the blending amount is more than 10% by weight, the transparency of film may be deteriorated.

Further, each coating layer may also comprise various additives such as a defoaming agent, a coatability improver, a thickening agent, an organic lubricant, organic polymer particles, an antioxidant, an ultraviolet absorber, a foaming agent and a dye, if required, unless the subject matter of the present invention is adversely affected thereby.

When forming the coating layer by a coating-stretching method (in-line coating), the both surface laminated polyester film is preferably produced by the method in which an aqueous solution or a water dispersion comprising a series of the above mentioned compounds is prepared as a coating solution having a concentration of about 0.1 to about 50% by weight in terms of a solid content thereof, and the thus prepared coating solution is applied onto the polyester film.

The coating solution may also comprise a small amount of an organic solvent for the purpose of improving a dispersibility in water, a film-forming property, etc., unless the subject matter of the present invention is adversely affected thereby. As the organic solvent, there are exemplified aliphatic or alicyclic alcohols such as n-butyl alcohol, n-propyl alcohol, isopropyl alcohol, ethyl alcohol and methyl alcohol, glycols such as propylene glycol, ethylene glycol and diethylene glycol, glycol derivatives such as n-butyl cellosolve, ethyl cellosolve, methyl cellosolve and propylene glycol monomethyl ether, ethers such as dioxane and tetrahydrofuran, esters such as ethyl acetate and amyl acetate, ketones such as methyl ethyl ketone and acetone, amides such as N-methyl pyrolidone. The organic solvents may be used alone, or may be appropriately used in the form of a mixture of any two or more thereof.

The coating amount (after drying) of coating layer constituting the release film of the present invention is usually in the range of 0.005 to 0.1 g/m², preferably 0.005 to 0.05 g/m² and more preferably 0.005 to 0.02 g/m². When the coating amount is less than 0.005 g/m², the thickness of coating layer may be insufficient in the uniformity thereof so that the oligomer amount precipitated from the coating layer surface after heat treatment may be increased. On the other hand, when coating in the amount of more than 0.1 g/m², there may be problems such as deteriorating the coating surface.

In the present invention, as the method of forming the respective coating layers on the polyester film, there may be used conventionally known coating methods such as a reverse gravure coating method, a direct gravure coating method, a roll coating method, a die coating method, a bar coating method, a curtain coating method and a spray coating method which are described, for example, in Yuji HARAZAKI, "Coating Methods", Maki-shoten, 1979.

In the release film according to the present invention, when using as a touch panel application, there may be required a high transparency after subjected to the condition at high temperature for long time such as at 150°C for 3 hours. In view of this, for the purpose of using it as the touch panel materials, it is preferred that the rate of haze change of film before and after heat treatment (at 150°C for 3 hours) (ΔH) is not more than 0.5%, more preferably not more than 0.3%, especially preferably not more than 0.1%. When the rate of haze change is more than 0.5%, the visibility is reduced with the rising haze so that it may be unsuitable to use as the applications requiring the high visibility such as use for the touch panel production.

The oligomer (cyclic trimer) amount (OL1) extracted by dimethylformamide from the film surface where no release layer is provided thereon before and after heat treatment (at 150°C for 3 hours) of the release film according to the present invention is preferably not more than 1.0 mg/m², more preferably not more than 0.8 mg/m². When the OL1 is more than 1.0 mg/m², for example in a continuous production under a condition of heat treatment at 150°C in the processing steps, the precipitation amount of oligomer precipitated from the film surface having no release layer becomes large so that the amount of oligomer attaching and depositing to the surface of conveying rolls is increased over time and it may be difficult to ensure the desired continuous productivity.

The oligomer (cyclic trimer) amount (OL2) extracted by dimethylformamide from the surface of release layer before and after heat treatment (at 150°C for 3 hours) of the release film according to the present invention is preferably not more than 1.0 mg/m², more preferably not more than 0.8 mg/m². When the OL2 is more than 1.0 mg/m², for example in a continuous production under a condition of heat treatment at 150°C in the processing steps, the precipitation amount of oligomer precipitated from the surface of release layer becomes large so that the amount of oligomer attaching and depositing to the surface of conveying rolls is increased over time and it may be difficult to ensure the desired continuous productivity.

### EXAMPLES

The present invention is described in more detail below by Examples. However, these Examples are only illustrative and not intended to limit the present invention thereto unless the subject matters depart therefrom. The measurement methods and evaluation method used in the present invention are explained below.

### (1) Measurement of intrinsic viscosity of polyester:

One gram of a polyester was accurately weighed, and mixed with and dissolved in 100 mL of a mixed solvent comprising phenol/tetrachloroethane at a weight ratio of 50/50, and a viscosity of the resulting solution was measured at 30°C.

### (2) Average particle size (d50:µm):

Using a centrifugal precipitation type particle size distribution measuring apparatus "SA-CP3 Model" manufactured by Shimadzu Seisakusho Corp., the particle size corresponding to a cumulative volume fraction of 50% in equivalent spherical distribution of the particles was measured as an average particle size d50.

### (3) Measurement of amount of oligomers extracted from the film surface constituting the release film according to the present invention where no release layer is provided thereon (OL1):

The test film was previously heated in air at 150°C for 3 hours. Thereafter, this heat-treated film was set to the inner surface of box as close as possible, where the upper side of box was open and the box size was 10 cm square and 3 cm high, so as to form a box shape film. Next, 4 ml of DMF (dimethylform amide) was poured into the box type film obtained from the above so as to contact the DMF with the surface of coating layer. After 3 minutes leaving thereof, the DMF was recovered. The recovered DMF was injected to a liquid chromatography ("LC-7" manufactured by Shimadzu Corporation) to determine the oligomer amount in the DMF. The value of the above oligomer amount was divided by the area of film contacted with the DMF to obtain the oligomer amount of film surface (mg/m²). The oligomer amount in the DMF was determined by the peak area ratio of standard sample peak area and measured sample peak area (absolute calibration method).

The above standard sample was prepared by precisely weighing the previously divided oligomer (cyclic trimer) and dissolving the oligomer into a precisely weighed DMF. The concentration of standard sample is preferably 0.001 to 0.01 mg/ml.

The measurement conditions of liquid chromatograph are set forth below.
Mobile phase A: Acetonitrile
Mobile phase B: 2% aqueous acetic acid solution
Column: "MCI GEL ODS 1HU" manufactured by Mitsubishi Chemical Corporation
Column temperature: 40°C
Flow rate: 1 ml/min
Detective wavelength: 254 nm

### (3) Measurement of amount of oligomers extracted from the surface of release layer constituting the release film according to the present invention (OL2):

The same procedure defined in the above term (3) was conducted except that the contacting surface with DMF was changed from the film surface having no release layer to the surface of release layer, to determine the oligomer amount (OL2).

### (5) Measurement of film haze of release film (HO):

The haze of the test film was measured using a haze measuring device "HAZE METER HM-150" manufactured by Murakami Color Research Laboratory Co., Ltd., according to JIS-K-7136.

### (6) Measurement of film haze after heat-treatment (H1):

The test film was heat-treated under prescribed conditions (at 150°C for 3 hours) and thereafter the haze of the test film was measured according to the same method to the above term (5).

### (7) Surrogate evaluation of visibility of release film (surrogate evaluation of practical property):

The transparency/visibility of sample film were evaluated by the following rating.

### <Rating>

A: The film haze after the heat-treatment (H1) is less than 0.9% and the transparency/visibility are especially good (practically no problem level).
B: The film haze after the heat-treatment (H1) is not less than 0.9% and less than 1.2%, and the transparency/visibility are good (practically no problem level).
C: The film haze after the heat-treatment (H1) is not less than 1.2% and the transparency/visibility are not good (practically problem level).

### (8) Durability evaluation of release film:

An adhesive tape (No. 31B tape manufactured by Nitto Denko Corporation) was previously adhered onto the coating layer surface of the sample film (when the release layers were provided on the both surface, the adhesive tape was adhered onto the release layers surfaces) and this sample film was leaved in a constant temperature and humidity chamber at 60°C under 90% RH for 24 hours. Next, after taking out the sample film, immediately the adhesive tape was released and the surface condition of each coating layer was evaluated by the following rating.

### <Rating>

A: In the releasing trace portion of adhesive tape, the coating layer (or release layer) is still remained (practically no problem level).
C: In the releasing trace portion of adhesive tape, the coating layer (or release layer) is not remained or even though remained, the remained coating layer (or release layer) is too few to exert the intrinsic performance of coating layer (practically problem level).

### (9) Continuous productivity evaluation of visibility of release film (surrogate evaluation of practical property):

An adhesive layer material having the following adhesive composition was applied onto the surface of release layer of the test film (film width: 1000 mm, winding length: 4000 m) so as to obtain a prescribed coating thickness (after drying), it was stuck to a prescribed laminate substrate. After the test film was processed for 40000 m cumulatively, the degree of adhered oligomer derived from the polyester film onto the conveying roll surface contacting to the film surface where no release layer is provided thereon after intermediately laminating was evaluated by the following rating.

### <Used coater/laminating equipment>

"Type: Third Machine" manufactured by Inoue Metalworking Industry Co., Ltd.
<Line speed> 60 m/min
<Length of drying furnace> 3 m X 3 zones
<Drying temperature (setting)> D1/D2/D3=120°C/120°C/100°C

### <Composition of adhesive layer material>

- Main agent: acryl-based adhesive "BPS-1109" manufactured by Toyo Ink Co., Ltd. 100 parts
- Curing agent: "BHS-8515" manufactured by Toyo Ink Co., Ltd. 2parts
- Solvent: toluene/MEK (methylethyl ketone) 50 parts

<Coating thickness (after drying)> 30 (g/m²)
<Laminate substrate> PET 50µm
<Laminating temperature> 40°C
<Laminating pressure> 5 kg/cm²

### <Rating>

A: Adhesion of oligomer onto the conveying roll was not visually observed (practically no problem level).
C: Adhesion of oligomer onto the conveying roll was visually observed (practically problem level).
D: Adhesion of oligomer onto the conveying roll was visually observed clearly (practically problem level).

The polyesters used in Examples and Comparative Examples were prepared by the following manners.

### <Production method of polyester (I)>

100 parts by weight of dimethylterephthalate and 60 parts by weight of ethylene glycol as starting materials and 0.09 parts by weight of magnesium acetate tetrahydrate as a catalyst were added into a reactor, the reaction was initiated at 150°C, the reaction temperature was gradually increased together with removing methanol and after 3 hours, the temperature reached 230°C. After 4 hours, ester exchange reaction was substantially finished. Into thus reaction mixture, 0.04 parts of ethyl acid phosphate was added and further 0.04 parts of antimony trioxide was added, the polycondensation reaction was conducted for 4 hours. Namely, the reaction temperature was gradually increased from 230°C to 280°C. On the other hand the pressure was gradually reduced from the ordinary pressure to finally 0.3 mmHg. After starting the reaction, the stirring driving force in the reactor was changed. When the intrinsic viscosity reached to 0.63, the reaction was stopped and the produced polymer was discharged under nitrogen pressurized condition. The intrinsic viscosity of obtained polyester (I) was 0.63.

### <Production method of polyester (II)>

The same procedure as defined in the Production method of polyester (I) was conducted except that after adding 0.04 parts of ethyl acid phosphate, 0.3 parts of silica particles having an average particle size of 1.6 µm which were dispersed in ethylene glycol and 0.04 parts of antimony trioxide were added and the polycondensation reaction was stopped at the stage that the intrinsic viscosity became 0.65, to produce a polyester (II). The intrinsic viscosity of obtained polyester (II) was 0.65.

### Example 1:

A mixture material prepared by mixing 90% of polyester (II) and 10% of polyester (I) as the material of outermost layer (surface layer) and the polyester (I) as the material of intermediate layer were provided to two extruders, respectively, melted at 285°C respectively, co-extruded onto a quenching roll whose temperatures was controlled at 40°C as a layer structure of two types/two layers (surface layer/intermediate layer/surface layer), and quenched and solidified thereof to prepare a non-stretched sheet. Next, the sheet was stretched in machine direction 3.4 times at 85°C by use of differential speed of rolls. After stretching in machine direction, a coating liquid comprising the following composition was applied on the both surfaces so that the coating amount (after drying) becomes the prescribed amount. After applying, the applied film was introduced to a tenter machine, stretched in transverse direction 4.3 times at 120°C, heat-treated at 225°C, and relaxed in transverse direction to obtain a laminated polyester film having the coating layer and having a thickness of 75 µm (each surface layer: 5 µm and intermediate layer: 65 µm). The used compounds for constituting the coating layer is set forth below.

### (Used compounds)

- Polymer containing ammonium base (A1): polymer of 2-hydroxy-3-methacryloxypropyl trimethyl ammonium salt, counter ion: methyl sulfonate, number average molecular weight: 30000
- Polymer containing polyethylene glycol (B1): mono acrylate polymer containing polyethylene glycol, number average molecular weight: 20000
- Polymer containing polyethylene glycol (B2): octoxypolyethylene glycol-polypropylene glycol mono acrylate polymer, number average molecular weight: 32000
- Polymer containing polyethylene glycol (B3): polyethylene glycol: number average molecular weight: 20000
- Crosslinking agent (C1): melamine-type crosslinking agent ("BECKAMINE MA-S" manufactured by DIC Corporation)
- Crosslinking agent (C2): oxazoline-type crosslinking agent ("EPOCROS WS-500" (manufactured by Nippon Shokubai Co., Ltd.)
- particles (D1): alumina surface-modified colloidal silica (average particle size: 50 nm)
- Binder (E1): polyvinylalcohol (saponification degree: 88 mol%, polymerization degree: 500)

On to one of the coating layer surface of obtained laminated film, a release agent having the following release agent composition was applied by use of a reverse gravure coating method so that the coating amount (after drying) would be 0.1 g/m², and heat-treated at 180°C for 10 seconds to obtain a release film. The properties of obtained release film are shown in the following Table 2.

### (Composition of release agent)

- Curable silicone resin ("KS-774" manufactured by Shin-Etsu Chemical Co., Ltd.) 100 parts
- Curing agent ("PL-4" manufactured by Shin-Etsu Chemical Co., Ltd.) 10 parts
- MEK/toluene mixed solvent (mixing ratio: 1:1) 1500 parts

### Examples 2 to 7:

The same procedure as defined in Example 1 was conducted except that the compositions of coating materials were changed as shown in the following Table 1 to produce release films. The properties of obtained release films are shown in the following Table 2.

### Comparative Example 1:

The same procedure as defined in Example 1 was conducted except that no coating layer was provided onto the film surface where no release layer was provided, to produce a release film. The properties of obtained release films are shown in the following Table 2.

### Comparative Example 2:

The same procedure as defined in Example 1 was conducted except that no coating layer was provided onto the film surface having the release layer, to produce a release film. The properties of obtained release films are shown in the following Table 2.

### Comparative Examples 3 to 5:

The same procedure as defined in Example 1 was conducted except that the composition of each coating layer was changed as shown in the following Table 1 to produce release films. The properties of obtained release films are shown in the following Table 2.

**[Table 1]**

| | A1 | B1 | B2 | B3 | C1 | C2 | D1 | E1 |
|---|---|---|---|---|---|---|---|---|
| Examples | | | | | | | | |
| Coating liquid 1 | 60 | 20 | 0 | 0 | 10 | 0 | 10 | 0 |
| Coating liquid 2 | 60 | 0 | 20 | 0 | 10 | 0 | 10 | 0 |
| Coating liquid 3 | 30 | 20 | 0 | 0 | 40 | 0 | 10 | 0 |
| Coating liquid 4 | 10 | 60 | 0 | 0 | 20 | 0 | 10 | 0 |
| Coating liquid 5 | 10 | 0 | 60 | 0 | 20 | 0 | 10 | 0 |
| Coating liquid 6 | 60 | 20 | 0 | 0 | 0 | 10 | 10 | 0 |
| Coating liquid 10 | 60 | 0 | 0 | 20 | 0 | 10 | 10 | 0 |

| Comp. Examples | | | | | | | | |
|---|---|---|---|---|---|---|---|---|
| Coating liquid 7 | 30 | 0 | 0 | 0 | 30 | 0 | 10 | 30 |
| Coating liquid 8 | 0 | 70 | 0 | 0 | 20 | 0 | 10 | 0 |
| Coating liquid 9 | 30 | 60 | 0 | 0 | 0 | 0 | 10 | 0 |

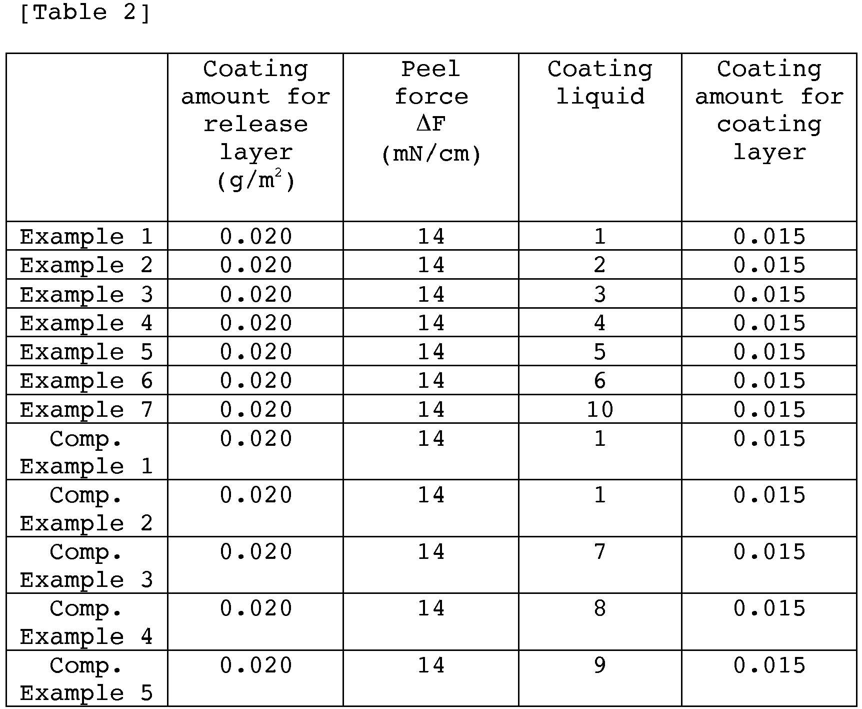

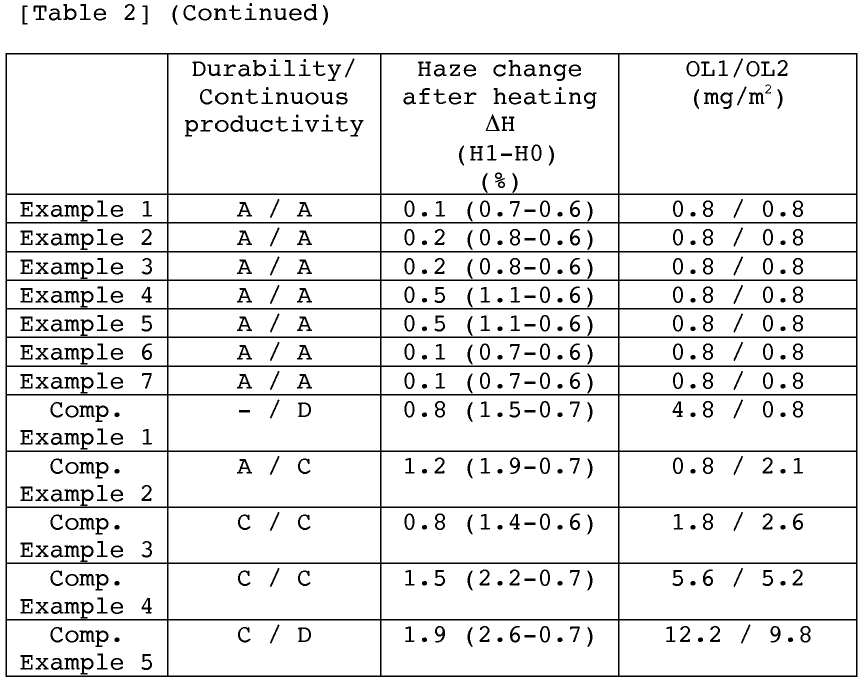

### INDUSTRIAL APPLICABILITY

The film according to the present invention is preferably used as for example touch panels applications and liquid crystal polarizing plates applications.

## Claims

1. A release film comprising:
a polyester film,
coating layers which is formed on both surfaces of said polyester film and comprises a polymer containing ammonium base, a polymer containing polyethylene glycol and a crosslinking agent, and
at least one release layer formed on at least one surface of said coating layers.

2. A release film according to claim 1, wherein the content of polymer containing ammonium base is 20 to 70% by weight, the content of polymer containing polyethylene glycol is 5 to 40% by weight and the content of crosslinking agent is 1 to 50% by weight based on the coating layers.

3. A release film according to claim 1 or 2, wherein the counter anion of quaternary ammonium base of polymer containing ammonium base is an anion other than halogen anions.

4. A release film according to any one of claims 1 to 3, wherein the polymer containing polyethylene glycol is an acrylate polymer containing polyethylene glycol.

5. A release film according to any one of claims 1 to 4, wherein the crosslinking agent is a melamine crosslinking agent or oxazoline crosslinking agent.

6. A release film according to claim 5, wherein the melamine crosslinking agent is a methylolmelamine derivative obtained by condensing melamine and formaldehyde.

7. A release film according to claim 5, wherein the oxazoline crosslinking agent is a polymer having an oxazoline group in a side chain thereof.

8. A release film according to claim 7, wherein the polymer having an oxazoline group is a polymer obtained by polymerizing an addition polymerization monomer having an oxazoline group and the other monomer.

9. A release film according to claim 8, wherein the other monomer is an acrylic monomer.
